# EUROPEAN PATENT APPLICATION

(11) **EP 2 475 064 A2**
(43) Date of publication of application: **11.07.2012**
(21) Application number: 11194678.6
(22) Date of filing: 20.12.2011
(51) Int. Cl.: H02J 7/00, H02J 7/02, H01M 10/42, H01M 10/44

(54) **Battery system and energy storage system including the same**

(30) Priority: 06.01.2011 US 201161430484 P; 23.09.2011 US 201113243234
(71) Applicant: Samsung SDI Co., Ltd., Yongin-si, Gyeonggi-do (KR)
(72) Inventor: Yun, Han-Seok, Gyeonggi-do (KR); Okada, Tetsuya, Gyeonggi-do (KR); Yang, Jong-woon, Gyeonggi-do (KR); Hwang, Eui-Jeong, Gyeonggi-do (KR)
(74) Representative: Walaski, Jan Filip

(57) **Abstract**

A battery system comprises a battery comprising a plurality of battery modules, each battery module comprising at least one battery cell, a plurality of measuring units, each comprising a plurality of primary analog front end AFE modules connected in series and a secondary analog front end AFE module connected to one of the primary AFE modules in the series, a processor for processing data received from the measuring units and an isolator for providing electrical isolation between the measuring units and the processor, wherein the isolator is connected to one of the secondary AFE modules other than to the secondary AFE module that is connected to the primary AFE module that corresponds to an outermost battery module at the highest or lowest potential end of the battery. The battery system allows for a reduction in the withstand voltage of the isolator.

## Description

The present invention relates to a battery system and an energy storage system including the same.

Recently, batteries have become widely used in various fields ranging from portable apparatuses, such as mobile phones or notebook computers, to large apparatuses, such as electric cars or energy storage systems. A battery and a control circuit for controlling charging and discharging constitute one system, and research into ways of effectively managing the battery is being conducted.

Meanwhile, when a battery is used in an electric car or an energy storage system, the battery outputs a relatively large voltage compared to a portable apparatus, and thus a control circuit is designed to withstand such a large voltage.

One or more embodiments of the present invention include a battery system capable of decreasing a withstand voltage of an element used in a battery, and an energy storage system including the battery system.

According to an aspect of the present invention, there is provided a battery system comprising a battery comprising a plurality of battery modules, each battery module comprising at least one battery cell, a plurality of measuring units, each comprising a plurality of primary analog front end AFE modules connected in series and a secondary analog front end AFE module connected to one of the primary AFE modules in the series, a processor for processing data received from the measuring units and an isolator for providing electrical isolation between the measuring units and the processor, wherein the isolator is connected to one of the secondary AFE modules other than to the secondary AFE module that is connected to the primary AFE module that corresponds to an outermost battery module at the highest or lowest potential end of the battery.

The secondary AFE module may be connected to the last primary AFE module in the series, and the isolator may be connected to one of the secondary AFE modules other than the secondary AFE module that is connected to the lowest potential end of the battery.

The position of the connection of the secondary AFE module to the primary AFE module may vary between the measuring units.

The plurality of secondary AFE modules may be connected in series.

Each of the plurality of primary AFE modules may be arranged to extract data of the battery cells in a battery module that is connected to the respective primary AFE module.

Each primary AFE module other than the primary AFE module connected to the secondary AFE module may be arranged to send the extracted data to the next primary AFE module.

Each primary AFE module other than the primary AFE module connected to the secondary AFE module may be arranged to send data extracted by itself to the next primary AFE module together with the data received from the previous primary AFE module, if any.

The primary AFE module connected to the secondary AFE module amy be arranged to send data extracted by itself together with data extracted by all other primary AFE modules in the series to the secondary AFE module.

The secondary AFE module connected to the isolator may be arranged to send data received by it from the corresponding primary AFE modules, together with the data received by it from the other secondary AFE modules in the battery system, to the processor via the isolator.

Each of the primary AFE modules may be arranged to extract measured data periodically or in response to a control signal from the processor.

The isolator connected to the processor may comprise a first isolator, the battery system further comprising a plurality of second isolators, each of the second isolators being connected between the secondary AFE modules of adjacent measuring units.

The first isolator may be connected to the secondary AFE module of a measuring unit other than the measuring units connected to the highest and lowest potential ends of the battery, the secondary AFE module being further connected to the preceding secondary AFE module and the following secondary AFE module via respective second isolators.

Each of the secondary AFE modules may be arranged to send data to or receive data from an adjacent secondary AFE module via a respective second isolator.

The secondary AFE module connected to the first isolator may be arranged to send data that it receives from the corresponding primary AFE modules, together with the data that it receives from the other secondary AFE modules via the respective second isolators to the processor via the first isolator.

There is further provided an energy storage system connectable to a power generation system and/or a grid, wherein the energy storage system includes a battery system according to any one of the preceding claims.

Embodiments of the invention are now described by way of example with reference to the accompanying drawings, in which:
FIG. 1 is a diagram illustrating a battery system, according to an embodiment of the present invention;
FIG. 2 is a diagram illustrating a battery system, according to another embodiment of the present invention;
FIG. 3 is a diagram illustrating a battery system, according to another embodiment of the present invention;
FIG. 4 is a flowchart illustrating a method of controlling a battery system, according to an embodiment of the present invention;
FIG. 5 is a diagram illustrating a battery system, according to another embodiment of the present invention;
FIG. 6 is a diagram illustrating a battery system, according to another embodiment of the present invention;
FIG. 7 is a diagram illustrating a battery system, according to another embodiment of the present invention;
FIG. 8 is a flowchart illustrating a method of controlling a battery system, according to another embodiment of the present invention; and
FIG. 9 is a view illustrating an energy storage system, according to an embodiment of the present invention.

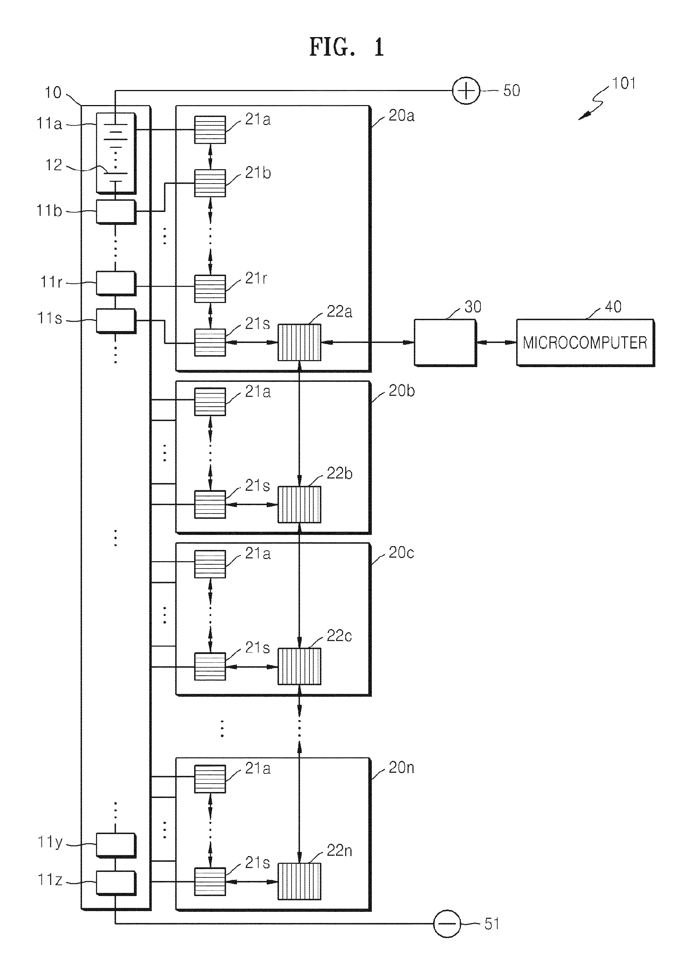

Referring to FIG. 1, the battery system 101 includes a battery 10, a plurality of measuring units 20a - n, a first isolator 30, and a microcomputer, or processor, 40.

The battery 10 stores power supplied from the outside by using a charging process and supplies the stored power to the outside by using a discharging process. In the battery 10, a positive electrode is connected to a positive terminal 50, a negative electrode is connected to a negative terminal 51, and charging and discharging operations are performed through the positive terminal 50 and the negative terminal 51.

The battery 10 includes a plurality of battery modules 11a - z connected to one another in series or in a combination of in series and in parallel. Each of the battery modules 11a - z includes at least one battery cell 12. When a plurality of the battery cells 12 are included in the battery module 11, the battery cells 12 may be connected to one another in series and/or in parallel. The battery cell 12 is a rechargeable secondary battery. In the embodiments of the present invention, only the case where the battery modules 11 and the battery cells 12 are connected to one another in series will be described for convenience of description, but the present invention is not limited thereto. However, the battery modules 11a - z have at least one series connected structure.

The measuring units 20a - n monitor states of the battery cells 12 included in each battery module 11a - z to extract data of the battery cells 12, for example voltages, charging states, and temperatures of the battery cells 12.

Each measuring unit 20a - n includes a plurality of primary analog front ends (hereinafter, referred to as AFE) 21a - s connected in series, also referred to as connected in a daisy chain, and a secondary AFE 22a - n connected to the last primary AFE 21s in the series. The plurality of primary AFEs 21a - s and the corresponding one of the secondary AFEs 22a - n may be formed on a single circuit board or substrate. An AFE is a circuit that measures analog values such as voltages, temperatures etc. and then converts the analog value to a digital signal, which can then be processed, transmitted to other AFEs and so on. An example of an AFE IC is given in Korean patent application no. 10-2007-0105220.

Each of the primary AFEs 21a - s is connected to a corresponding one of the battery modules 11a - s and monitors states of the battery cells 12 included in the corresponding battery module 11a - s. Each of the primary AFEs 21a - n may extract periodically measured values as data during monitoring of the battery cells 12. Alternatively, the values may be measured according to a control signal applied from the secondary AFE 22a - n or the microcomputer 40.

Each of the primary AFEs 21a - r, except the last primary AFE 21s sends a result of the monitoring, that is, the extracted data, to the next primary AFE 21b - s in the series. For example, a first primary AFE 21a sends first data representing a first measured value to a second primary AFE 21b. The second primary AFE 21b receives the first data from the first primary AFE 21a, and sends both the first data and second data representing a second value measured by itself to the next primary AFE 21c (not shown) in the series. The last primary AFE 21s receives all data extracted by the previous primary AFEs 21a - r in the series. In general, the primary AFE 21 that receives the data from the other primary AFEs for forwarding to a secondary AFE 22 is also referred to as a main primary AFE 21.

The last primary AFE 21s sends all the received data together with the data measured by the last primary AFE 21s to the corresponding secondary AFE 22a - n. In other words, all the data extracted by a measuring unit 20a - n is collected in the main primary AFE 21s and is then sent to the secondary AFE 22a - n.

Each of the plurality of measuring units 20a - n includes a secondary AFE 22a - n, the secondary AFEs 22a - n being connected in series. The secondary AFE 22n of the last measuring unit 20n sends the data collected from the plurality of primary AFEs 21a - s in the last measuring unit 20n to a next secondary AFE 22n-l in the next measuring unit 20n-1. The secondary AFE 22n-1 therefore receives data collected in the last secondary AFE 22n and sends the received data to the secondary AFE 22n-2 in the series together with the data collected by the secondary AFE 22n-1 itself.

In the current embodiment, the battery cells 12 are connected to one another in series, and thus a potential difference is increased as a distance between a standard battery cell 12 that sets a reference level or ground and another battery cell 12 is increased. The battery cell 12 disposed at a lower side of the battery module 11, from among the battery cells 12 which are electrically connected to the first AFE 21a included in the uppermost measuring unit 20a, may be the standard battery cell 12. The first primary AFEs 21a - r send the extracted data in a direction from a high potential to a low potential, and the last primary AFE 21s, acting as the main primary AFE 21 and disposed in the low potential, collects all the extracted data. Meanwhile, in the current embodiment, the plurality of measuring units 20a - n are connected to one another in series in order to measure states of the battery cells 12. At this time, the secondary AFE 22n included in the measuring unit 20n disposed in the lowest potential, that is, the lowermost measuring unit 20n, sends collected data to the secondary AFE 22 included in the next measuring unit 20n-1. In this regard, the next measuring unit 20n-1 refers to the measuring unit disposed in a potential higher than that of the previous measuring unit 20n. The first secondary AFE 22a, that is, the uppermost secondary AFE 22a collects data of all the battery cells 12 included in the battery 10 that is sequentially sent from a low potential to a high potential. The uppermost secondary AFE 22a sends the collected data to the first isolator 30. In general, the secondary AFE 22 that is connected to the isolator 30 is also referred to as the main secondary AFE 22.

In other words, in the current embodiment, a potential of a negative electrode of the lowermost battery cell 12 from among the battery cells 12 connected to the last primary AFE 21s included in the first measuring unit 20a may be a standard potential (a ground potential). The primary AFEs 21a - r disposed above the primary AFE 21s connected to the standard battery cell 12 measure data with respect to a positive voltage, and the primary AFEs 21 disposed below the primary AFE 21 s connected to the standard battery cell 12 measure data with respect to a negative voltage.

The first isolator 30 is a data transmission path between the main secondary AFE 22a and the microcomputer 40. The first isolator 30 separates and isolates grounds of the measuring units 20a - n and the microcomputer 40 from each other. The first isolator 30 may be any of various circuits, for example, a level shift circuit or an optical isolator.

The microcomputer 40 controls charging and discharging operations of the battery 10 by using data regarding the battery cell 12 received via the first isolator 30. Meanwhile, a required withstand voltage of the first isolator 30 is determined according to a configuration of the battery system 101. In the current embodiment, a plurality of the secondary AFEs 22a - n sequentially send collected data in a direction from a low potential to a high potential. The main secondary AFE 22a that is electrically connected to the standard battery cell 12 sends and receives data by being connected to the first isolator 30.

For the purposes of further detailed description, while the drawings show a generic number of measuring units, it is assumed that there are four measuring units 20a - d and that the first isolator 30 is connected to the uppermost, or first, measuring unit 20a. It is further assumed that each measuring unit 20a - d has three primary AFEs 21a - c and one secondary AFE 22a - d connected to one of the primary AFEs, for example the last primary AFE 21c in each of the measuring units 20a - d. Each of the primary AFEs 21a - 21c are connected to one battery module. In the first measuring unit 20a, the secondary AFE 22a is connected to the last primary AFE 21c and then to the first isolator 30, although variations in the connection arrangement will be described in detail below.

Due to the position of the main secondary AFE 22a for sending data, a voltage corresponding to a potential difference of the battery modules 11 corresponding to three measuring units 20b - d is applied to the first isolator 30, and thus the first isolator 30 may have a withstand voltage having a level that is the same as the applied voltage. For example, when the single battery cell 12 has a voltage of about 4V and ten battery cells 12 are connected to the single battery module 11 in series, then each battery module 11a - c provides 40V, and each measuring unit 20b to 20d measures 120V. As a result, three times this voltage is applied to the first isolator 30, which may therefore have a withstand voltage having a level that is the same as about 360V.

In other words, in the current embodiment, as described above, the ground potential of the main secondary AFE 22a or the first isolator 30 is a potential of a negative electrode of the lowermost battery cell 12 from among the plurality of battery cells 12 included in the battery module 11 connected to the main primary AFE 21c of the first measuring unit 20a. At this time, voltages applied to the main secondary AFE 22a and the first isolator 30 respectively have a magnitude of 120V (40V x 3) that is the sum of voltages of the battery modules 11 corresponding to the first measuring unit 20a and a magnitude of -360V (-120V x 3) that is the sum of voltages of the battery modules 11 corresponding to the measuring units 20b - d disposed below the first measuring unit 20a. Accordingly, the main secondary AFE 22a and the first isolator 30 may be capable of withstanding a voltage of about 360V on the basis of an absolute value.

Hereinafter, in all embodiments, an output voltage of each battery cell 12 is about 4V and an output voltage of each battery module 11 is about 40V for convenience of description. However, the present invention is not limited thereto, and output voltages of the battery cell 11 and the battery module 12 may vary according to a type of the battery cell 11.

Conventionally, all the extracted data is sent to the secondary AFE 22n, that is, the lowermost secondary AFE 22n, included in the measuring unit 20n disposed in the lowest potential, that is, the lowermost measuring unit 20n, from among the plurality of measuring units 20a - n connected to one another in series. That is, a ground potential of the first isolator 30 is a potential of a negative electrode of the lowermost battery cell 12 from among the battery cells 12. Accordingly, if the first isolator 30 receives data from the secondary AFE 22n disposed in the lowest potential, the first isolator 30 needs to have a withstand voltage that may withstand a voltage corresponding to a potential difference of the battery modules 11 corresponding to four measuring units 20a - d, or in the generic case, to all of the measuring units 20a - n. That is, the first isolator 30 needs to have a withstand voltage of more than about 480V. However, as a withstand voltage required in a certain element or circuit is increased, it is not easy to manufacture the element or the circuit. Also, an increase in a manufacturing cost of the element or the circuit is not proportional to an increase in a withstand voltage required in the element or the circuit, and as the amount of required withstand voltage is increased, a manufacturing cost is increased significantly.

As described above, according to the battery system 101 of the current embodiment, when data extracted from the battery cells 12 is sent to the microcomputer 40, a withstand voltage of an isolator may be decreased by allowing the main secondary AFE 22 electrically connected to the isolator 30 not to be electrically connected to the uppermost primary AFE 21a in the uppermost measuring unit 20a or the lowermost primary AFE 21s in the lowermost measuring unit 20n.

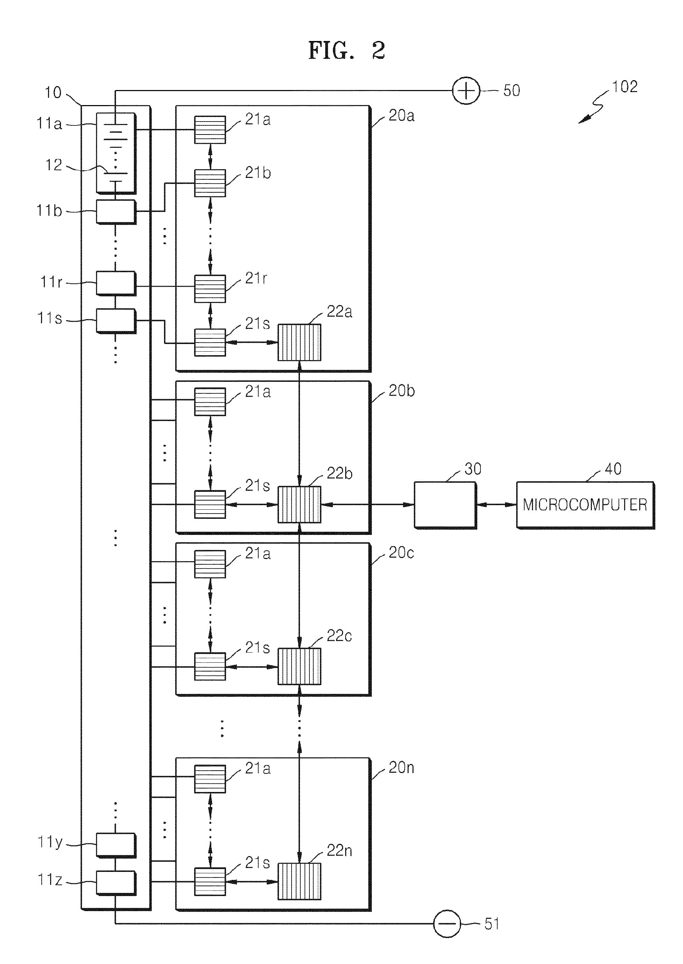

FIG. 2 is a diagram illustrating a battery system 102, according to another embodiment of the present invention.

Referring to FIG. 2, the battery system 102 includes a battery 10, a plurality of measuring units 20, a first isolator 30, and a microcomputer 40. The battery system 102 of the current embodiment has substantially the same configuration and function as the battery system 101 of FIG. 1, and thus only a difference will be mainly described here.

A secondary AFE 22b in a second measuring unit 20b receives data extracted by a plurality of primary AFEs 21a - s in the second measuring unit 20b from a primary AFE 21s to which the secondary AFE 22b is connected. Also, the secondary AFE 22b receives data collected in another secondary AFE 22a, 22c - n or sends data received from another secondary AFE 22a, 22c - n or the data collected from the primary AFEs 21a - s of the measuring unit 20b including the secondary AFE 22b to another secondary AFE 22a, 22c.

At this time, in the battery system 102 according to the current embodiment in which the plurality of measuring units 20 are connected to one another in series, the main secondary AFE 22b is a second secondary AFE 22 included in the second measuring unit 20 with respect to a high potential side and a negative electrode of the battery cell 12 electrically connected to the last primary AFE 21s included in the second measuring unit 20b becomes a standard (ground) level. Accordingly, the first secondary AFE 22a disposed in a highest potential measuring unit 20a sends the collected data to the second secondary AFE 22b. Also, the secondary AFEs 22c - n disposed in a potential lower than that of the second secondary AFE 22b sequentially send the collected data in a direction from a low potential to a high potential.

As described above, a required withstand voltage of the first isolator 30 is determined according to a configuration of the battery system 102. In the current embodiment, the second secondary AFE 22b sends and receives data by being connected to the first isolator 30. At this time, again assuming the presence of four measuring units 20a - 20d as in the first embodiment above, and due to the position of the second secondary AFE 22b, a voltage corresponding to a potential difference of battery modules 11 corresponding to two measuring units 20c, 20d is applied to the first isolator 30, and thus the first isolator 30 has a withstand voltage having a level that is the same as the applied voltage. For example, the first isolator 30 of the current embodiment may have a withstand voltage having a level that is the same as about 240V.

As described above, according to the battery system 102 of the current embodiment, when data extracted from battery cells 12 is sent to the microcomputer 40, the second secondary AFE 22b disposed in an intermediate potential is used as the secondary AFE 22 for sending data to the first isolator 30, thereby decreasing a withstand voltage of the first isolator 30.

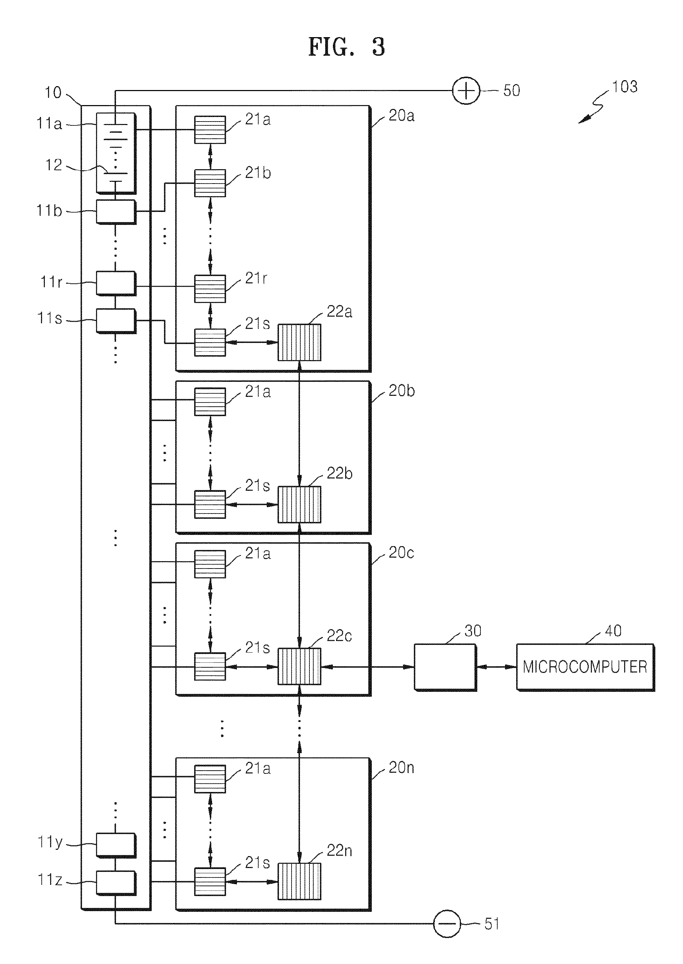

FIG. 3 is a diagram illustrating a battery system 103, according to another embodiment of the present invention.

Referring to FIG. 3, the battery system 103 includes a battery 10, a plurality of measuring units 20, a first isolator 30, and a microcomputer 40. The battery system 103 of the current embodiment has substantially the same configuration and function as the battery system 101 of FIG. 1, and thus only a difference will be mainly described here.

A third secondary AFE 22c receives data extracted by a plurality of primary AFEs 21a - s from a last primary AFE 21s. Also, the third secondary AFE 22c receives data collected in another secondary AFE 22a - b, 22d - n or sends data received from another secondary AFE 22 or data collected from the primary AFEs 21a - s of the measuring unit 20c including the third secondary AFE 22c itself to another secondary AFE 22b, 22d.

At this time, in the battery system 103 according to the current embodiment in which four measuring units 20a - d are connected to one another in series, the third secondary AFE 22c is in the second measuring unit 20c from the low potential side. Accordingly, the fourth secondary AFE 22d disposed in a lowest potential sends the collected data to the third secondary AFE 22c. Also, the secondary AFEs 22a, b disposed in a potential higher than that of the third secondary AFE 22c sequentially send the collected data in a direction from a high potential to a low potential. At this time, the third secondary AFE 22c becomes a standard (ground) level.

As described above, a required withstand voltage of the first isolator 30 is determined according to a configuration of the battery system 103. In the current embodiment, the third secondary AFE 22c sends and receives data by being connected to the first isolator 30. At this time, due to the position of the main secondary AFE 22c for sending data, a voltage corresponding to a potential difference of battery modules 11 corresponding to at most three measuring units 20a - 20c is applied to the first isolator 30, and thus the first isolator 30 has a withstand voltage having a level that is the same as the applied voltage. For example, the first isolator 30 of the current embodiment may have a withstand voltage having a level that is the same as about 360V.

As described above, according to the battery system 103 of the current embodiment, when data extracted from battery cells 12 is sent to the microcomputer 40, the third secondary AFE 22c disposed in an intermediate potential is used for sending data to the first isolator 30, thereby decreasing a withstand voltage of the first isolator 30.

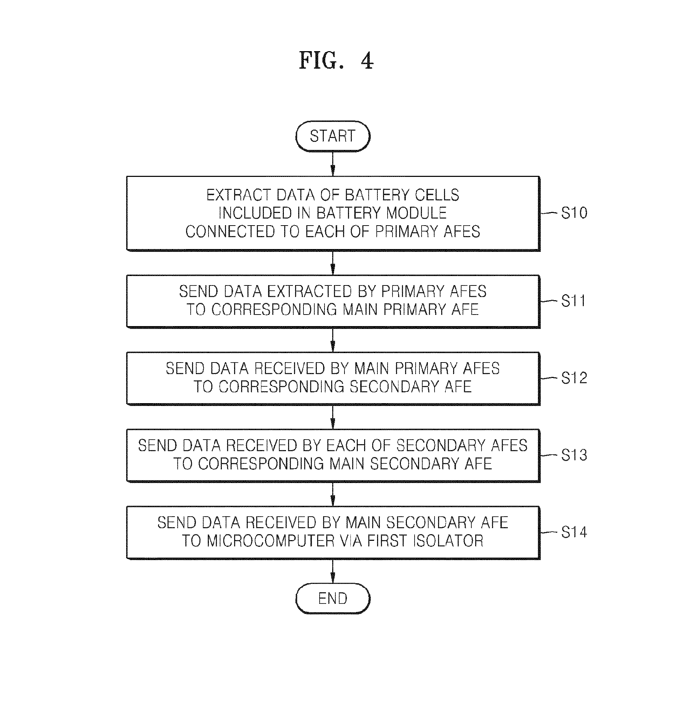

FIG. 4 is a flowchart illustrating a method of controlling the battery systems 101 through 103, according to an embodiment of the present invention.

Referring to FIG. 4, data of the battery cells 12 included in the battery module 11 connected to each of the plurality of primary AFEs 21a - s is extracted (S10). Each primary AFE 21a - r sends the extracted data to the main primary AFE 21s included in the same measuring unit 20, that is, to the main primary AFE 21s formed on the same substrate (S11).

The main primary AFEs 21s that have received data and have collected extracted data send the collected data to the corresponding secondary AFEs 22a - n (S12). Each secondary AFE 22 having received data sends the received data to the main secondary AFE 22 that is connected to the isolator (S13), which is a secondary AFE 22 other than the secondary AFE 22n included in the measuring unit 20n disposed in a lowest potential. That is, the selected secondary AFE 22 that is capable of decreasing a withstand voltage of the first isolator 30 is set as the main secondary AFE 22 that is connected to the isolator.

The main secondary AFE 22 connected to the isolator 30 sends received information via the first isolator 30 to the microcomputer 40 (S14).

As described above, according to the battery systems 101 through 103 of the current embodiment, when data extracted from the battery cells 12 is sent to the microcomputer 40, a withstand voltage of the first isolator 30 may be decreased by changing a position of the main secondary AFE 22 for sending data to the first isolator 30.

Meanwhile, in FIGS. 1 through 3, the secondary AFE 22a - n included in each measuring unit 20 receives data from the last primary AFE 21s, but the present invention is not limited thereto. That is, the secondary AFE 22a - n included in each measuring unit 20 may receive data from the primary AFE 21a - r disposed at the uppermost side or disposed in the middle portion.

Also, a position of the primary AFE 21 connected to the secondary AFE 22 may vary for each measuring unit 20. That is, for example, the lowermost first AFE 21s may be connected to the secondary AFE 22a in the uppermost measuring unit 20a, and the uppermost primary AFE 21a may be connected to the secondary AFE 22b - n in other measuring units 20b - n.

However, in the embodiment illustrated in FIG. 1, when the uppermost primary AFE 21a is connected to the first secondary AFE 22a in the uppermost measuring unit 20a, a withstand voltage of the first isolator 30 may not be decreased. Accordingly, in the embodiment illustrated in FIG. 1, the primary AFEs 21b - 21s, except for the uppermost first AFE 21a, can be connected to the first secondary AFE 22a (is set as the main first AFE 21) in the uppermost measuring unit 20a.

In addition, although not shown in the drawings, when any of the primary AFEs 21a - r, except for the lowermost primary AFE 21s, is set as the main first AFE 21 in the lowermost measuring unit 20n, the first isolator 30 may receive data from the secondary AFE 22n included in the lowermost measuring unit 20n.

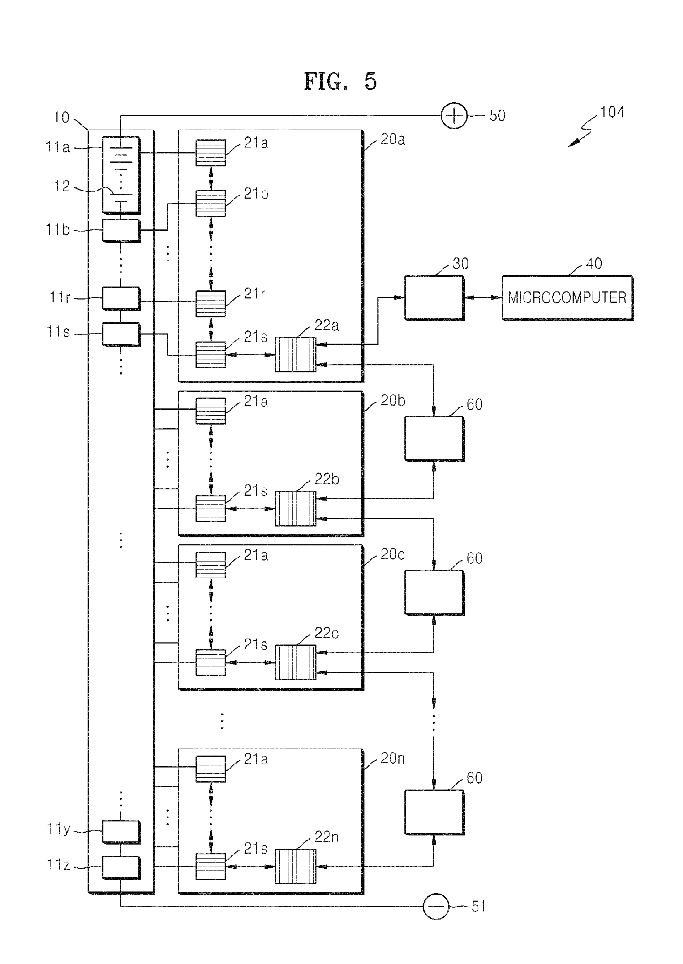

FIG. 5 is a diagram illustrating a battery system 104, according to another embodiment of the present invention.

Referring to FIG. 5, the battery system 104 includes a battery 10, a plurality of measuring units 20, a first isolator 30, a microcomputer 40, and a plurality of second isolators 60. The battery system 104 of the current embodiment has substantially the same configuration and function as the battery system 101 of FIG. 1, and thus only a difference will be mainly described here.

A first secondary AFE 22a receives data extracted by a plurality of primary AFEs 21a -s from a last primary AFE 21s. Also, the secondary AFE 22a receives data collected in another secondary AFE 22b - n or sends data received from another secondary AFE 22b - n or data collected from the primary AFEs 21a - s of the measuring unit 20a including the first secondary AFE 22a to another secondary AFE 22b - n.

Meanwhile, in the battery system 104 of the current embodiment, sending and receiving of data between the plurality of secondary AFEs 22 is performed through the second isolator 60. That is, the second isolator 60 is a data transmission path between the secondary AFEs 22a - n. The second isolator 60 separates and insulates grounds between the plurality of measuring units 20a - n. The second isolator 60 may be any of various circuits, for example, a level shift circuit or an optical isolator.

Meanwhile, withstand voltages of the first isolator 30 and the second isolator 60 are determined according to a configuration of the battery system 104. In the current embodiment, data is sent between the secondary AFEs 22a - n through the second isolator 60, and thus each second isolator 60 may have a withstand voltage of about 120V. Also, the main secondary AFE 22a connected to the first isolator 30 receives data from a plurality of other secondary AFEs 22b - n through the second isolator 60, and thus the first isolator 30 may also have a withstand voltage of about 120V.

According to the battery system 104 of the current embodiment, when data extracted from the battery cells 12 is sent to the microcomputer 40, the battery system 104 is configured to send the extracted data between the secondary AFEs 22a - n through the second isolator 60, thereby decreasing the withstand voltages of the first isolator 30 and the second isolator 60. Also, as described above, an increase in a manufacturing cost of an element or a circuit is not proportional to an increase in a withstand voltage required in the element or the circuit, and as the amount of required withstand voltage is increased, a manufacturing cost is increased significantly. Thus, according to the battery system 104 of the current embodiment, although the number of isolators is increased, the manufacturing cost may be reduced.

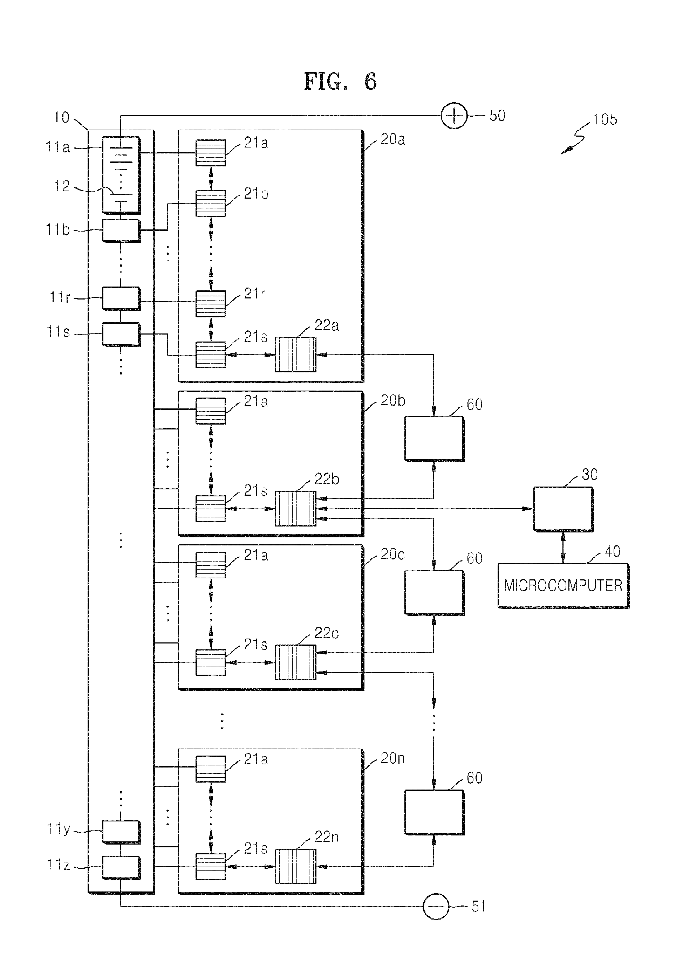

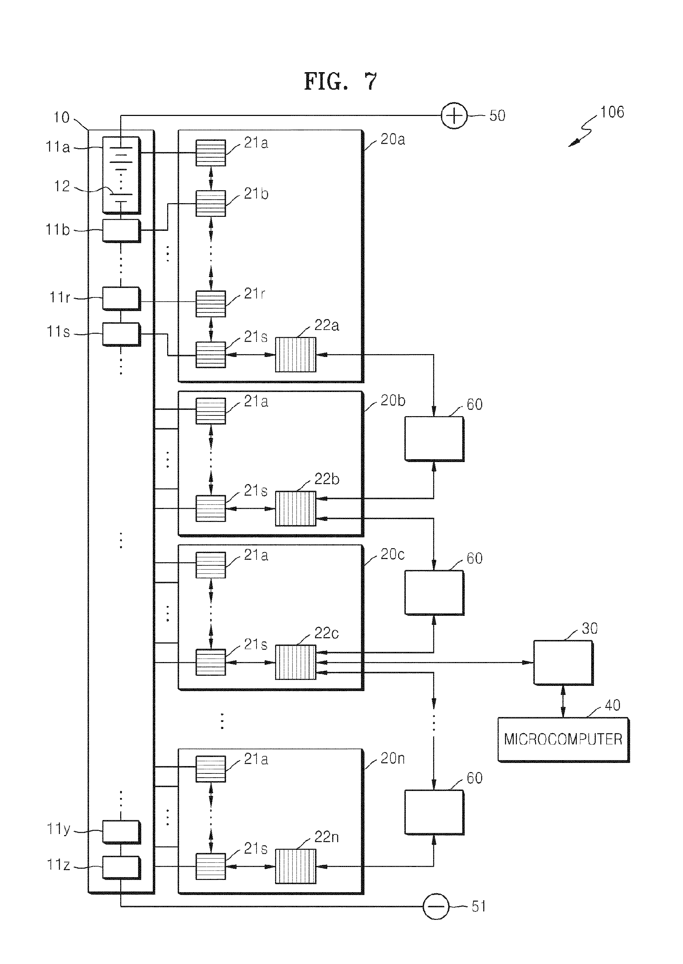

FIGS. 6 and 7 are diagrams respectively illustrating battery systems 105 and 106, according to other embodiments of the present invention.

Referring to FIGS. 6 and 7, the battery systems 105 and 106 are different from the battery system 104 of FIG. 5 in that a main secondary AFE 22b, c connected to a first isolator 30 is changed, but have substantially the same configuration and function as the battery system 104 of FIG. 5, and thus a detailed description thereof will be omitted here.

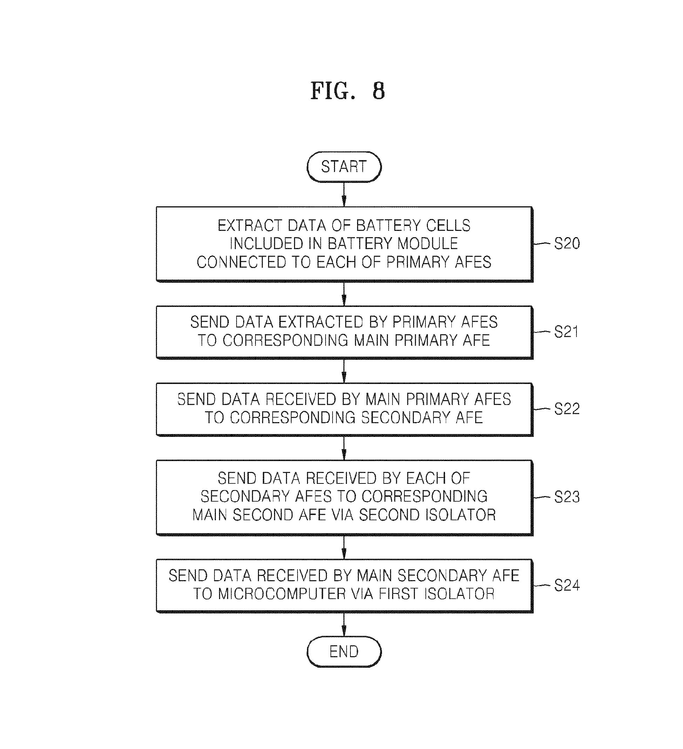

FIG. 8 is a flowchart illustrating a method of controlling the battery systems 104 through 106.

Referring to FIG. 8, data of the battery cells 12 included in the battery module 11 connected to each of the plurality of primary AFEs 21 is extracted (S20). Each primary AFE 21 sends the extracted data to the main primary AFE 21 included in the same measuring unit 20, that is, to the main primary AFE 21 formed on the same substrate (S21).

The main primary AFEs 21, which have received data and have collected extracted data, send the collected data to the corresponding secondary AFE 22 (S22). Each secondary AFE 22 having received data sends the received data to the main secondary AFE 22 through the second isolator 60 (S23). In this regard, the main secondary AFE 22 may be a secondary AFE 22 other than the secondary AFEs 22 included in the measuring unit 20 disposed in a lowest potential. That is, the secondary AFE 22 capable of decreasing a withstand voltage of the first isolator 30 is set to be the main secondary AFE 22.

The main secondary AFE 22 sends received information via the first isolator 30 to the microcomputer 40 (S24).

As described above, according to the battery systems 104 through 106 of the current embodiment, when data extracted from the battery cells 12 is sent to the microcomputer 40, withstand voltages of the first isolator 30 and the second isolator 60 may be decreased by configuring the battery systems 104 through 106 to send data between the secondary AFEs 22 through the second isolator 60. Also, as described above, an increase in a manufacturing cost of an element or a circuit is not proportional to an increase in a withstand voltage required in the element or the circuit, and as the amount of required withstand voltage is increased, a manufacturing cost is increased significantly. Thus, according to the battery systems 104 through 106, although a number of isolators is increased, the manufacturing cost may be reduced.

Meanwhile, in FIGS. 5 through 7, the secondary AFE 22a - n included in each measuring unit 20a - n receives data from the main primary AFE 21s disposed at the lowermost side from among the plurality of first AFEs 21a - s, but the present invention is not limited thereto. That is, the secondary AFE 22a - n included in each measuring unit 20a - n may receive data from the primary AFE 21a - r disposed at the uppermost side or disposed in the middle portion.

Also, a position of the primary AFE 21a - s connected to the secondary AFE 22a - n may vary for each measuring unit 20a - n. That is, for example, the lowermost primary AFE 21s may be set as the main primary AFE in the uppermost measuring unit 20a, and the uppermost primary AFE 21a may be set as the main primary AFE in other measuring units 20b - n.

In addition, although not shown in the drawings, in the embodiments illustrated in FIGS. 5 through 7, the second isolator 60 is disposed between the measuring units 20, and thus the second isolator 60 may receive data from the secondary AFE 22n included in the lowermost measuring unit 20.

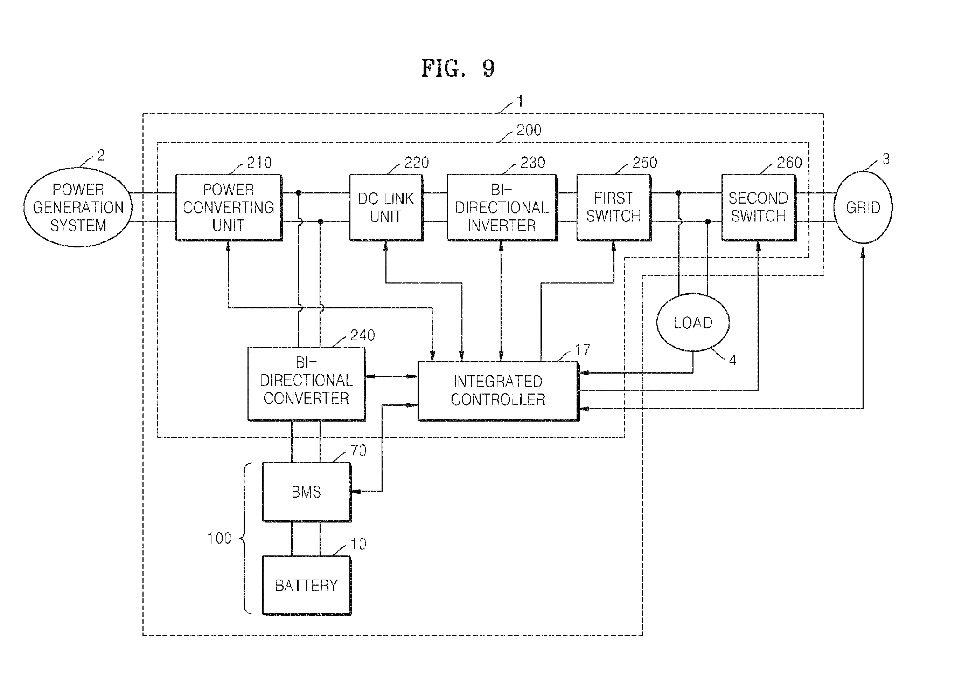

FIG. 9 is a diagram illustrating an energy storage system 1 according to an embodiment of the present invention.

Referring to FIG. 9, the energy storage system 1 of the current embodiment supplies power to a load 4 by being connected to a power generation system 2 and a grid 3.

The power generation system 2 is a system for generating power by using an energy source. The power generation system 2 supplies the generated power to the energy storage system 1. The power generation system 2 may be a photovoltaic system, a wind power generation system, a tidal power generation system, or the like, but the present invention is not limited thereto. The power generation system 2 may be any power generation system for generating power by using a renewable energy such as solar heat or geothermal heat.

The grid 3 includes a power plant, a substation, a power line, and the like. When the grid 3 is in a normal state, the grid 3 supplies power to the energy storage system 1 so as to supply power to the load 4 and/or a battery 10. The grid 3 also receives power from the energy storage system 1. When the grid 3 is in an abnormal state, power is stopped from being supplied from the grid 3 to the energy storage system 1, and power is also stopped from being supplied from the energy storage system 1 to the grid 3.

The load 4 consumes power generated by the power generation system 2, power stored in a battery 10, and power supplied from the grid 3. The load 4 may be, for example, a home, a plant, or the like.

The energy storage system 1 may store power generated by the power generation system 2 in the battery 10 and supply the power to the grid 3. The energy storage system 1 may supply power stored in the battery 10 to the grid 2 or store power supplied from the grid 3 in the battery 10. When the grid 3 is in an abnormal state, for example, when a power failure occurs in the grid 3, the energy storage system 1 may also perform an uninterruptible power supply (UPS) operation so as to supply power to the load 4. The energy storage system 1 may also supply power generated by the power generation system 2 or power stored in the battery 10 to the load 4 when the grid 3 is in a normal state.

The energy storage system 1 includes a power conversion system (hereinafter, referred to as a PCS) 200, a battery management system (hereinafter, referred to as a BMS) 70, and the battery 10.

The PCS 200 converts power of the power generation system 2, the grid 3, and the battery 10 into appropriate power and supplies the converted power to where it is required. The PCS 200 includes a power converting unit 210, a direct current (DC) link unit 220, a bi-directional inverter 230, a bi-directional converter 240, a first switch 250, a second switch 260, and an integrated controller 270.

The power converting unit 210 is connected between the power generation system 2 and the DC link unit 220. The power converting unit 210 delivers power generated by the power generation system 2 to the DC link unit 220, and at this time, the power converting unit 210 converts an output voltage into a DC link voltage. In particular, when the power generation system 2 generates power by using solar light, the power converting unit 210 may include a maximum power point tracking (MPPT) converter for performing MPPT control so as to maximize the amount of power generated by the power generation system 2 according to a change in the amount of sun light or temperature.

A magnitude of the DC link voltage may be unstable due to a sudden voltage drop in the power generation system 2 or the grid 3 or generation of a peak load in the load 4. However, the DC link voltage may need to be stable for normal operations of the bi-directional converter 240 and the bi-directional inverter 230. The DC link unit 220 may include, for example, a large-capacity capacitor for stabilization of the DC link voltage, and is connected between the power converting unit 210 and the bi-directional inverter 230 so as to constantly maintain the DC link voltage.

The bi-directional inverter 230 is a power converter connected between the DC link unit 220 and the first switch 250. The bi-directional inverter 230 may include an inverter that converts the DC link voltage output from the power generation system 2 and/or the battery 10 into an alternating current (AC) voltage of the grid 2 in a discharging mode and outputs the AC voltage. Also, the bi-directional inverter 230 may include a rectifying circuit that rectifies an AC voltage supplied by the grid 3 into a DC link voltage and outputs the DC link voltage in order to store power supplied from the grid 3 in the battery 10 in a charging mode.

The bi-directional inverter 230 may include a filter for removing higher harmonics from an AC voltage to be output to the grid 3, and a phase locked loop (PLL) circuit for synchronizing a phase of an AC voltage output from the bi-directional inverter 230 and a phase of an AC voltage of the grid 3. Also, the bi-directional inverter 230 may perform functions such as voltage change range restriction, power-factor improvement, elimination of a DC component, protection against a transient phenomena, and the like.

The bi-directional converter 240 is a power converter connected between the DC link unit 220 and the battery 10. The bi-directional converter 240 includes a converter for DC-DC converting power stored in the battery 10 into power having a voltage level required by the bi-directional inverter 230, that is, a DC link voltage, and outputting the DC link voltage in a discharging mode. The bi-directional converter 240 includes a converter for DC-DC converting power output from the power converting unit 210 or power output from the bi-directional inverter 230 into power having a voltage level required by the battery 10, that is, a charging voltage, in a charging mode.

The first switch 250 and the second switch 260 are connected to each other in series between the bi-directional inverter 230 and the grid 3, and control current flow between the power generation system 2 and the grid 3 by performing ON/OFF operations under the control of the integrated controller 270. The ON/OFF operations of the first switch 250 and the second switch 260 may be performed according to states of the power generation system 2, the grid 3, and the battery 10. For example, when a large amount of power is required in the load 4, the first switch 250 and the second switch 260 are turned on so as to supply power of the power generation system 2, the grid 3, and the battery 10 to the load 4. On the other hand, when a power failure occurs in the grid 3, the second switch 260 is turned off and the first switch 250 is turned on. Thus, power output from the power generation system 2 or the battery 10 may be supplied to the load 4, and accidents such as a worker being shocked by a power line of the grid 3 may be prevented by preventing power supplied to the load 4 from flowing toward the grid 3.

The integrated controller 270 monitors states of the power generation system 2, the grid 3, the battery 10, and the load 4 and controls the power converting unit 210, the bi-directional inverter 230, the bi-directional converter 240, the first switch 250, the second switch 260, and the BMS 70 according to a result of the monitoring. The integrated controller 270 may monitor whether a power failure occurs in the grid 3 and whether power is being generated by the power generation system 2. In addition, the integrated controller 270 may monitor an amount of power generated by the power generation system 2, a charging state of the battery 10, an amount of power consumed in the load 4, a time, and the like.

The BMS 70 is connected to the battery 10 and controls charging and discharging operations of the battery 10 under the control of the integrated controller 270. The BMS 70 may perform an overcharging protection function, an overdischarging protection function, an overcurrent protection function, an overvoltage protection function, an overheating protection function, a cell balancing function, and the like in order to protect the battery 10. For this, the BMS 70 may monitor a voltage, a current, a temperature, an amount of power remaining, a lifespan, a charging state, etc., of the battery 10, and may transmit a result of the monitoring to the integrated controller 270.

The battery 10 stores power generated by the power generation system 2 and power of the grid 3 and supplies the stored power to the load 4 or the grid 3. A number of the batteries 10 may be determined according to an amount of power required in the energy storage system 1, design conditions, and the like. For example, when a large amount of power is consumed by the load 4, a plurality of the batteries 10 may be included, and when a small amount of power is consumed by the load 4, only the single battery 10 may be included.

Meanwhile, the battery system 100 including the battery 10 and the BMS 70 may be the battery systems 101 through 106 described in FIGS. 1 through 3 and 5 through 7. The BMS 70 may include a plurality of measuring units 20, a first isolator 30, a second isolator 60, a microcomputer 40, and the like.

As described above, in the energy storage system 1 according to the current embodiment, withstand voltages of the first isolator 30 and/or the second isolator 60 included in the battery system 100 may be decreased, thereby reducing an installation cost of the energy storage system 1.

It should be understood that the exemplary embodiments described herein should be considered in a descriptive sense only and not for purposes of limitation. Descriptions of features or aspects within each embodiment should typically be considered as available for other similar features or aspects in other embodiments. The inventive concept may be embodied in many different forms by one of ordinary skill in the art without departing from the scope of the invention as defined by the claims.

## Claims

1. A battery system (101 - 106) comprising:
a battery (10) comprising a plurality of battery modules (11), each battery module comprising at least one battery cell (12);
a plurality of measuring units (20a - 20n), each comprising a plurality of primary analog front end AFE modules (21a - ns) connected in series and a secondary analog front end AFE module (22a - n) connected to one of the primary AFE modules in the series;
a processor (40) for processing data received from the measuring units; and
an isolator (30) for providing electrical isolation between the measuring units and the processor,
wherein the isolator (30) is connected to one of the secondary AFE modules (22a - 22n) other than to the secondary AFE module that is connected to the primary AFE module that corresponds to an outermost battery module at the highest or lowest potential end of the battery.

2. The battery system of claim 1, wherein the secondary AFE module is connected to the last primary AFE module (21c) in the series, and the isolator (30) is connected to one of the secondary AFE modules other than the secondary AFE module (22n) that is connected to the lowest potential end of the battery.

3. The battery system of claim 1, wherein the position of the connection of the secondary AFE module to the primary AFE module varies between the measuring units (20a - n).

4. The battery system of any one of the preceding claims, wherein the plurality of secondary AFE modules (22a - 22n) are connected in series.

5. The battery system of any one of the preceding claims, wherein each of the plurality of primary AFE modules are arranged to extract data of the battery cells in a battery module that is connected to the respective primary AFE module.

6. The battery system of claim 5, wherein each primary AFE module other than the primary AFE module connected to the secondary AFE module is arranged to send the extracted data to the next primary AFE module.

7. The battery system of claim 5 or 6, wherein each primary AFE module other than the primary AFE module connected to the secondary AFE module is arranged to send data extracted by itself to the next primary AFE module together with the data received from the previous primary AFE module, if any.

8. The battery system of any one of claims 5 to 7, wherein the primary AFE module connected to the secondary AFE module is arranged to send data extracted by itself together with data extracted by all other primary AFE modules in the series to the secondary AFE module (22a - n).

9. The battery system of any one of the preceding claims, wherein the secondary AFE module connected to the isolator (30) is arranged to send data received by it from the corresponding primary AFE modules, together with the data received by it from the other secondary AFE modules in the battery system, to the processor (40) via the isolator.

10. The battery system of any one of the preceding claims, wherein each of the primary AFE modules is arranged to extract measured data periodically or in response to a control signal from the processor (40).

11. The battery system of claim 1, wherein the isolator (30) connected to the processor (40) comprises a first isolator (30), the battery system further comprising a plurality of second isolators (60), each of the second isolators being connected between the secondary AFE modules of adjacent measuring units.

12. The battery system of claim 11, wherein the first isolator (30) is connected to the secondary AFE module of a measuring unit other than the measuring units connected to the highest and lowest potential ends of the battery (10), the secondary AFE module being further connected to the preceding secondary AFE module and the following secondary AFE module via respective second isolators.

13. The battery system of claim 11 or 12, wherein each of the secondary AFE modules is arranged to send data to or receive data from an adjacent secondary AFE module via a respective second isolator (60).

14. The battery system of any one of claims 11 to 13, wherein the secondary AFE module connected to the first isolator (30) is arranged to send data that it receivesd by it from the corresponding primary AFE modules, together with the data that it receives from the other secondary AFE modules via the respective second isolators (60), to the processor (40) via the first isolator (30).

15. An energy storage system (1) connectable to a power generation system (2) and/or a grid (3), wherein the energy storage system includes a battery system according to any one of the preceding claims.
